# FASCICULE DE BREVET EUROPEEN

(11) **EP 0 940 655 B1**
(45) Date de publication et mention de la délivrance du brevet: **28.01.2004**
(21) Numéro de dépôt: 99410009.7
(22) Date de dépôt: 17.02.1999
(51) Int. Cl.: G01D 5/26, G01K 11/32, G02B 6/38

(54) **Sonde de mesure comportant au moins une fibre optique, dispositif de mesure et installation comportant au moins une telle sonde**
Messsensor mit wenigstens einem optischen Fiber, Messvorrichtung und Messsystem mit wenigstens so einem Sensor
Measuring sensor with at least one optical fiber, measuring device and installation using at least same

(30) Priorité: 06.03.1998 FR 9803001
(43) Date de publication de la demande: 08.09.1999
(73) Titulaire: Schneider Electric Industries SAS, 92500 Rueil-Malmaison (FR)
(72) Inventeur: Persegol, Dominique, 38050 Grenoble Cedex 09 (FR); Minier, Vincent, 38050 Grenoble Cedex 09 (FR); Lovato, Jean-Louis, 38050 Grenoble Cedex 09 (FR); Petit, Christian, 38050 Grenoble Cedex 09 (FR); Amblard, Pierre, 38050 Grenoble Cedex 09 (FR); Hermil-Boudin, Alain, 38050 Grenoble Cedex 09 (FR)
(74) Mandataire: Jouvray, Marie-Andrée

(56) Documents cités:
- DE-U- 9 308 118
- DE-U- 29 500 373
- US-A- 5 107 445
- PATENT ABSTRACTS OF JAPAN vol. 13, no. 66 (P-828), 15 février 1989 & JP 63 253910 A (TOSHIBA CORP.), 20 octobre 1988
- PATENT ABSTRACTS OF JAPAN vol. 13, no. 4 (P-809), 9 janvier 1989 & JP 63 212910 A (TOSHIBA CORP.), 5 septembre 1988
- PATENT ABSTRACTS OF JAPAN vol. 7, no. 121 (P-199) [1266], 25 mai 1983 & JP 58 038904 A (MATSUSHITA DENKI SANGYO K.K.), 7 mars 1983

## Description

L'invention concerne une sonde de mesure à fibre optique comportant
- au moins une fibre optique,
- au moins un capteur de température disposé à une extrémité d'au moins une fibre optique, et
- au moins un circuit électronique comportant des premiers moyens de connexion électrique.
L'invention concerne aussi un dispositif comportant une telle sonde et des moyens de traitement de signaux, et une installation comportant au moins un conducteur électrique et une telle sonde.

Les sondes de mesure à fibre optique connues comportent généralement au moins une fibre optique dont une première extrémité est reliée à un capteur et une seconde extrémité est raccordée à un dispositif de traitement électronique. Pour raccorder les fibres au dispositif de traitement, il est connu d'utiliser des connecteurs optiques amovibles destinés à coopérer avec des éléments optiques ou optoélectroniques fixes reliés au circuit de traitement.

Les connecteurs optiques nécessitent un alignement rigoureux avec d'autres fibres ou avec des éléments optoélectroniques pour obtenir un couplage maximal de la puissance des signaux lumineux circulant dans les fibres. De plus, les connecteurs optiques sont coûteux et encombrants et par conséquent peu compatibles avec des installations qui ont besoin de plusieurs points de mesure. En particulier, lorsque les sondes à fibres optiques sont utilisées dans un environnement industriel, les connecteurs optiques risquent de subir des contraintes qui peuvent détériorer les liaisons optiques lors de leur installation ou de leur manipulation.

Le document US5107445 décrit un exemple de sonde de température à fibre optique comportant un connecteur optique pour connecter une fibre optique sur une tête optique disposée sur une carte de circuit imprimé destinée au traitement de signal.

Dans des installations industrielles la mise en place de sondes et leur remplacement doivent pouvoir être effectués par du personnel connaissant lesdites installations. Ce personnel n'est pas toujours spécialisé dans le raccordement de fibres optiques ou n'est pas toujours outillé pour le faire sur le lieu de l'installation. Ainsi, les sondes à fibre optique connues ne sont pas toujours facilement utilisables dans des installations industrielles sans avoir recours à des moyens techniques spécifiques et des précautions de montage strictes sur les lieux desdites installations.

L'invention a pour but une sonde de mesure à fibre optique pouvant facilement être installée, un dispositif de mesure et une installation comportant une telle sonde.

Une sonde à fibre optique selon l'invention est définie par la revendication 1. Dans un mode de réalisation préférentiel, la sonde comporte des moyens d'amplification connectés entre des moyens convertisseurs de signaux et les premiers moyens de connexion.

La sonde comporte un capteur disposé sur ladite au moins une fibre optique et réagissant à des signaux lumineux, des signaux lumineux provenant dudit capteur étant représentatifs d'une grandeur physique à mesurer.

Avantageusement, la sonde comporte des moyens de mémorisation pour mémoriser des paramètres de calibration ou de réglage.

De préférence, les moyens convertisseurs de signaux comportent au moins un photo-détecteur, convertissant des signaux lumineux fournis à une extrémité d'une fibre optique en signaux électroniques.

De préférence, les moyens convertisseurs de signaux comportent au moins un émetteur optique pour convertir des signaux électroniques provenant des premiers moyens de connexion électriques en signaux lumineux injectés à une extrémité d'une fibre optique maintenue en liaison optique avec ledit émetteur optique.

Selon un mode de réalisation particulier, le capteur de température disposé à une extrémité d'au moins une fibre optique comporte un matériau luminescent, un premier signal lumineux étant envoyé depuis des moyens convertisseurs pour exciter ledit matériau luminescent et un second signal lumineux étant émis par ledit matériau et véhiculé à travers ladite fibre optique vers les moyens convertisseurs de signaux, ledit second signal lumineux ayant une longueur d'onde différente de la longueur d'onde du premier signal lumineux et une décroissance représentative d'une température.

De préférence, la sonde comporte une première et une seconde fibres optiques disposées entre le capteur et les moyens convertisseurs de signaux, la première fibre optique conduisant le premier signal lumineux et la seconde fibre optique conduisant le second signal lumineux.

Par exemple, la sonde peut comporter un système optique de séparation disposé entre la fibre optique et les moyens convertisseurs de signaux.

Pour filtrer des signaux lumineux, la sonde peut comporter un filtre optique disposé entre une extrémité d'une fibre optique et les moyens convertisseurs de signaux.

De préférence, au moins une fibre optique est une fibre optique en matière plastique.

Avantageusement, les moyens de maintien de fibre optique comportent une pièce de positionnement d'une fibre optique sur les moyens convertisseurs de signaux.

De préférence, les moyens de maintien de fibre optique comportent un élément de guidage.

Selon un mode de réalisation préférentiel, des moyens convertisseurs comportent au moins une diode électroluminescente, un photo-détecteur et des moyens de fixation pour maintenir une première fibre optique en liaison optique avec ladite diode électroluminescente et une seconde fibre optique en liaison optique avec ledit photo-détecteur.

Pour intégrer trois voies de mesure, la sonde comporte des moyens de fixation pour maintenir trois premières fibres optiques en liaison optique avec trois diodes électroluminescentes et trois secondes fibres optiques en liaison optique avec trois photo-détecteurs.

Dans le but de réduire le volume de la sonde, les diodes électroluminescentes et les premiers moyens de connexion sont disposés sur un premier circuit imprimé et les photo-détecteurs sont disposés sur un second circuit imprimé, le second circuit imprimé étant relié électriquement au premier circuit imprimé et positionné sensiblement orthogonalement.

Afin de protéger des composants électroniques ou optoélectroniques, la sonde peut comporter un premier enrobage isolant couvrant au moins une partie du circuit électronique et un second enrobage conducteur couvrant au moins une partie du premier enrobage.

Dans une application préférée, la sonde est utilisée pour la mesure de température d'au moins un conducteur électrique.

Un dispositif de mesure à fibre optique selon l'invention comporte des moyens de traitement de signaux, une sonde telle que définie ci-dessus, et des seconds moyens de connexion connectés audits moyens de traitement et destinés à coopérer avec les premiers moyens de connexion.

Une installation selon l'invention comporte au moins un conducteur électrique, et au moins une sonde telle que définie ci-dessus reliée audit conducteur électrique.

D'autres avantages et caractéristiques ressortiront plus clairement de la description qui va suivre, de modes particuliers de réalisation de l'invention, donnés à titre d'exemples non limitatifs, et représentés sur les dessins annexés sur lesquels :
- la figure 1 montre un schéma de raccordement de sondes à fibres optiques de type connu,
- la figure 2 montre un premier schéma de sondes et de dispositifs à fibre optique selon un premier mode de réalisation de l'invention,
- la figure 3 montre un second schéma de sondes et de dispositifs à fibres optiques selon un second mode de réalisation de l'invention,
- la figure 4 montre un troisième schéma de sonde et de dispositif à fibres optiques selon un troisième mode de réalisation de l'invention,
- la figure 5 montre un capteur pouvant être associé à une sonde selon des modes de réalisation de l'invention,
- les figures 6a et 6b montrent des signaux pouvant circuler dans des fibres optiques de sondes selon des modes de réalisation de l'invention,
- la figure 7 montre un schéma d'une sonde selon un mode de réalisation de l'invention à trois voies de mesure,
- la figure 8 montre une vue d'une sonde selon le schéma de la figure 7 à trois voies,
- la figure 9 montre une vue de côté d'une sonde selon un mode de réalisation de l'invention,
- la figure 10 montre une vue d'une sonde selon le schéma de la figure 7 comportant des moyens de maintien améliorés.

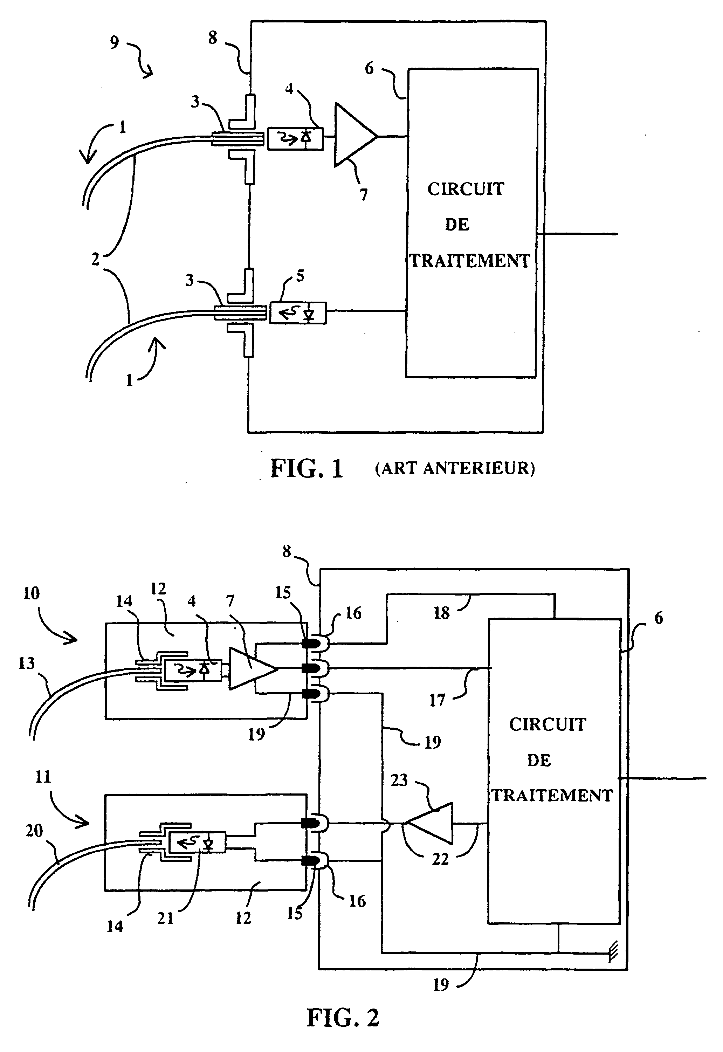

Dans le mode de réalisation connu de la figure 1, les sondes à fibres optiques 1 comportent des fibres optiques 2 associées à des connecteurs optiques 3. Ces connecteurs optiques sont amovibles, ils coopèrent avec des dispositifs optoélectroniques 4 et 5, connectés à un circuit de traitement 6 d'un dispositif 8 de centralisation de mesures. Les dispositifs optoélectroniques peuvent comporter, notamment un photo-détecteur 4 pour recevoir des signaux lumineux ou une diode électroluminescente 5 pour émettre des signaux lumineux. De préférence, un amplificateur 7 est connecté entre le photo-détecteur 4 et le circuit de traitement 6 pour amplifier des signaux électroniques représentatifs de signaux lumineux.

Dans certains cas, des fibres intermédiaires peuvent être utilisées entre les connecteurs optiques et les dispositifs optoélectroniques.

Lorsque les sondes sont utilisées dans des installations industrielles comportant des dispositifs de mesure 8, le raccordement optique des connecteurs 3 risque de ne pas être parfaitement réalisé. En effet, il faut parfois un outillage spécifique et du personnel qualifié pour ajuster l'alignement optique des connecteurs 3 avec les dispositifs optoélectroniques 4 et 5. De plus, si ce couplage optique n'est pas de bonne qualité, les pertes optiques sont trop élevées et les mesures réalisées par les sondes risquent d'être erronées.

Un autre inconvénient de l'utilisation de fibres avec des connecteurs optiques concerne le risque de détérioration desdits connecteurs. En effet, ces sondes peuvent subir toutes sortes de contraintes mécaniques ou atmosphériques qui peuvent modifier les caractéristiques du couplage optique. Par exemple, les connecteurs optiques peuvent être salis, partiellement bouchés ou être recouverts d'humidité ou de poussière.

Dans une sonde selon un mode de réalisation de l'invention, la sonde comporte un circuit électronique sur lequel une fibre optique est maintenue en liaison optique avec un dispositif optoélectronique convertisseur de signaux relié à un connecteur électrique. Un utilisateur final reçoit dans ce cas une sonde dont la partie liaison optique est déjà réalisée. Cet utilisateur, spécialisé notamment dans les installations électriques, n'aura plus qu'à connecter électriquement la sonde sans se préoccuper de la partie optique. La liaison optique étant réalisée de manière optimale et protégée hermétiquement, les contraintes extérieures sont sans effet et les mesures réalisées par la sonde ne sont pas altérées.

La figure 2 montre un dispositif de mesure avec deux sondes 10 et 11 à fibre optique selon un premier mode de réalisation de l'invention. Une première sonde 10 comporte un circuit électronique 12 tel qu'un circuit imprimé sur lequel un photo-détecteur 4 est optiquement lié à une fibre optique 13 maintenue et protégée par un dispositif de maintien 14. Le circuit 12 comporte un connecteur électrique 15 amovible destiné à coopérer avec un connecteur électrique fixe 16 disposé sur le dispositif 8. Le circuit électrique peut aussi comporter un amplificateur 7 connecté entre le photo-détecteur 4 et le connecteur 16. Les connecteurs 15 et 16 véhiculent aussi dans ce mode de réalisation, un signal électronique de mesure 17, une ligne de référence 19 et une ligne d'alimentation 18.

Une seconde sonde 11 comporte un circuit électronique 12 tel qu'un circuit imprimé ou un circuit filaire sur lequel une fibre optique 20 est optiquement liée à une diode électroluminescente 21, ladite diode 21 étant maintenue et protégée par un dispositif de maintien 14. La diode électroluminescente 21 est reliée au connecteur amovible 15 disposé sur le circuit 12, ledit connecteur 15 étant destiné à coopérer avec un connecteur fixe 16 disposé sur le dispositif 8. Sur cette figure les connecteurs 15 et 16 ont un point de connexion pour envoyer un signal électronique 22 à la diode 21 et un point pour la ligne de référence 19. Le signal 22 fourni par le circuit de traitement 6 peut être amplifié par un circuit d'amplification 23.

Dans un mode de réalisation préférentiel, l'ensemble des points de connexion des connecteurs 15 peut être regroupé sur un même connecteur, et les fibres 13 et 20 peuvent coopérer à une même mesure et être maintenues sur un même circuit 12.

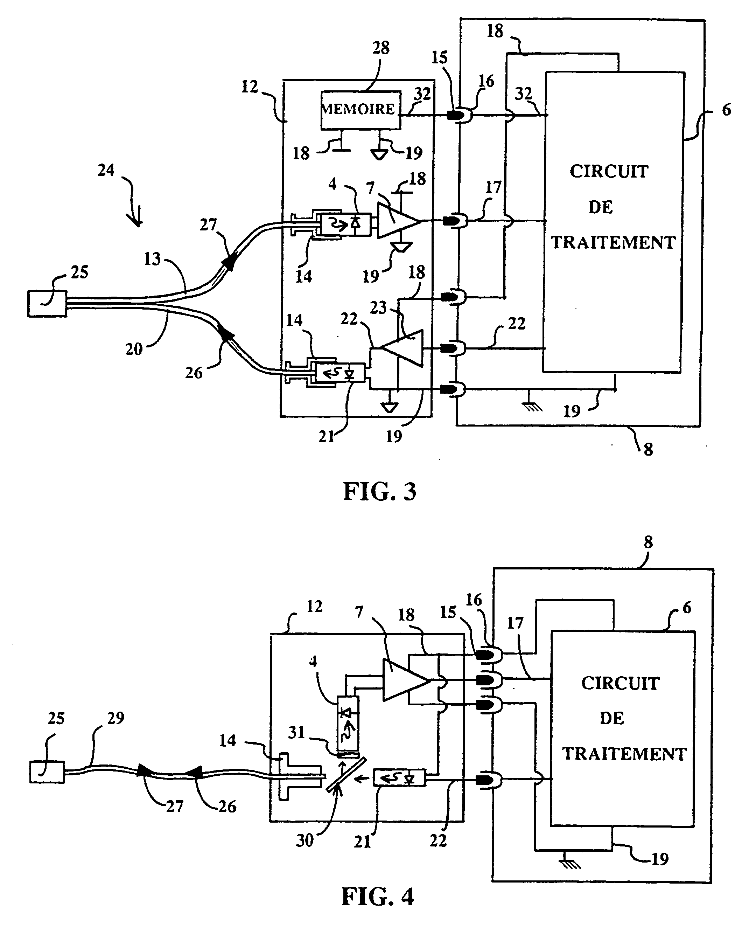

La figure 3 montre le schéma d'un dispositif de mesure et d'une sonde 24 comportant deux fibres optiques 13 et 20 associées à un capteur 25. Les deux fibres optiques sont maintenues par une extrémité sur un circuit 12 en liaison optique avec des dispositifs convertisseurs de signaux 4 et 21, l'autre extrémité de chaque fibre étant associée au capteur 25.

Une première fibre 20 est maintenue sur un circuit 12 en liaison optique avec la diode électroluminescente 21 par une première extrémité, l'autre extrémité étant associée au capteur 25. Une seconde fibre optique 13 est maintenue sur le circuit 12 en liaison optique avec le photo-détecteur 4 par une première extrémité, l'autre extrémité étant aussi associée au capteur 25. Sur ce schéma, le photo-détecteur 4 est un phototransistor connecté à l'entrée d'un amplificateur 7 dont la sortie est reliée à un connecteur 15 amovible. La diode 21 est reliée à travers un circuit amplificateur 23 au connecteur 15. Le connecteur 15 est susceptible d'être associé à un connecteur 16 fixe du dispositif 8.

Le circuit de traitement 6 est connecté au connecteur fixe 16. Il envoie des signaux de commande 22 à la diode 21 et reçoit depuis le photo-détecteur 4 des signaux de mesure 17 et retour. Les signaux de commande 22 sont convertis par la diode électroluminescente 21 en premier signal lumineux 26 circulant dans la première fibre optique 20 pour exciter le capteur 25. Ensuite, un second signal lumineux 27 émis par le capteur 25 circule dans la seconde fibre optique 13 pour être détecté par le photo-détecteur 4 qui convertit le second signal lumineux en signal électronique 17. Ce signal est amplifié par l'amplificateur 7 et fournit au circuit de traitement 6 à travers les connecteurs électriques 15 et 16.

Les liaisons optiques étant ajustées de manière optimale puis les fibres étant fixées et maintenues, les mesures réalisées par les sondes sont sûres et fiables. De plus, les sondes peuvent être facilement installées ou remplacées par de simples connexions électriques des connecteurs amovibles 15.

De manière à améliorer l'interchangeabilité des sondes, un circuit de mémorisation 28 disposé sur le circuit 12 permet de mémoriser des paramètres de réglage ou de calibration. Ainsi, les sondes comportant des capteurs 25 peuvent être étalonnées en laboratoire ou sur un site spécialisé lors du montage puis être utilisées facilement sans réglage dans des installations industrielles. Les paramètres d'étalonnage ou de calibration peuvent concerner notamment des décalages en continu, des réponses en amplitude ou en distorsion, des atténuations en fonction du temps, des temps de retard, ou des tables de correspondance. Lorsqu'une sonde est connectée à un circuit de traitement 6, des informations 32 représentatives des paramètres de réglage sont fournies audit circuit 6. Ainsi, pour chaque sonde comportant un circuit de mémorisation, le circuit de traitement 6 peut corriger et adapter les signaux électroniques représentatifs des signaux lumineux circulant dans les fibres et représentatif de mesures physiques. Ces informations 32 circulent à travers les connecteurs 15 et 16.

La figure 4 montre le schéma d'un dispositif de mesure et d'une sonde comportant une fibre optique 29 dans laquelle circulent le premier et le second signal lumineux 26 et 27. La fibre 29 est reliée au capteur 25 par une première extrémité et l'autre extrémité opposée est maintenue sur le circuit 12 par le dispositif de maintien 14 en liaison optique avec la diode électroluminescente 21 et le photo-détecteur 4. Un dispositif de séparation 30 comportant une lame semi-réfléchissante est disposé entre l'extrémité de la fibre 29, la diode 21 et le photo-détecteur 4 pour séparer les signaux 27 venant de la fibre et du capteur en direction du photo-détecteur 4 des signaux lumineux 26 allant de la diode vers la fibre et le capteur. Dans d'autres modes de réalisation, le dispositif de séparation peut être un diviseur de puissance à fibre.

Pour améliorer la qualité de la séparation lorsque les signaux 27 et 26 ont des longueurs d'onde différentes, un filtre optique 31 est disposé devant le photo-détecteur 4. Le filtre optique laisse passer le signal 27 ayant une première longueur d'onde et bloque le signal 26 ayant une seconde longueur d'onde. Sur cette sonde, le circuit 12 comporte le connecteur 15 amovible qui véhicule les lignes d'alimentation 18 et de référence 19 ainsi que le signal 17 de mesure et le signal 22 de commande de la diode 21.

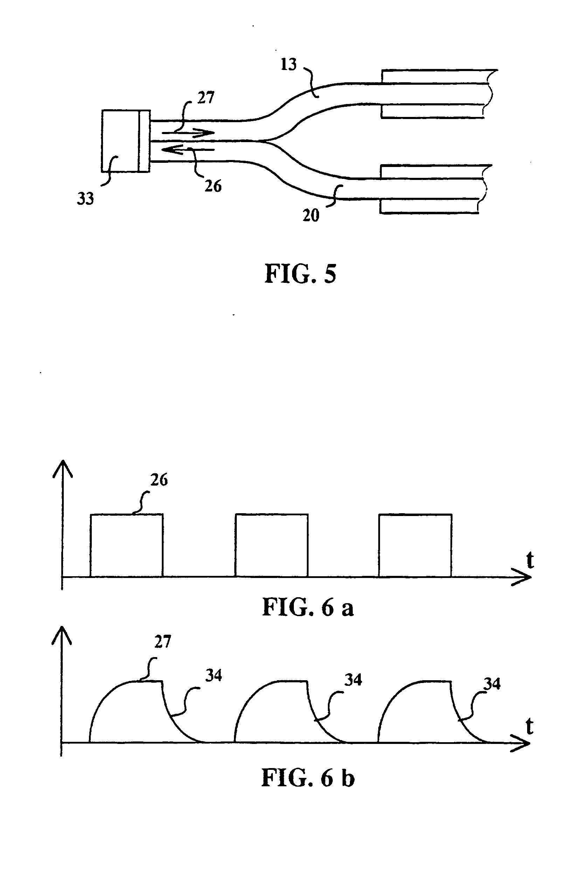

Un capteur pouvant être utilisé dans des sondes selon l'invention est représenté sur la figure 5. Ce capteur comporte un matériau 33 qui réagit à la lumière du premier signal 26 qu'il reçoit. Ensuite, ou en même temps, le second signal lumineux 27 est émis par ledit matériau 33. Le second signal lumineux est représentatif d'une grandeur physique à mesurer. Notamment, dans un mode de réalisation particulier, cette grandeur physique est une température.

Si le matériau 33 est un matériau fluorescent ou luminescent, le second signal a une longueur d'onde différente de la longueur d'onde du premier signal. De plus, l'intensité lumineuse du second signal décroît de façon quasi exponentielle en fonction du temps lorsque le premier signal cesse d'illuminer le matériau 33. Lorsque le matériau 33 est notamment du rubis ou de l'alexandrite sous forme de poudre, une décroissance 34 du second signal est représentative de la température dudit matériau.

La figure 6a illustre l'amplitude lumineuse d'un premier signal 26 illuminant le matériau 33 et la figure 6b illustre un second signal 27 émis par ledit matériau 33. Le circuit de traitement 6 détermine une valeur de la température à laquelle se trouve le matériau 33 en fonction de la décroissance 34 du signal 27 converti en signal électronique 17.

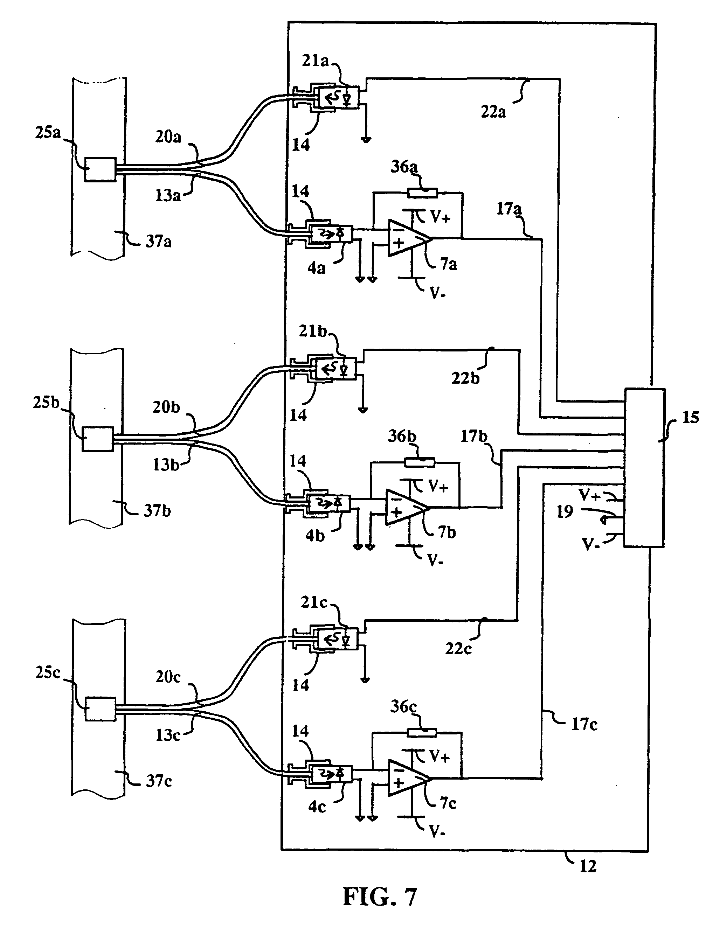

La figure 7 montre le schéma d'une sonde à fibres optiques pour trois voies de mesure. Les voies de mesure comportant des premières fibres optiques 20a, 20b, 20c relient optiquement des capteurs 25a, 25b, 25c, à des diodes électroluminescentes 21a, 21b, 21c et des secondes fibres optiques 13a, 13b, 13c relient les capteurs 25a, 25b, 25c à des photo-détecteurs représentés par des photodiodes 4a, 4b, 4c.

Les six fibres optiques 20a, 20b, 20c, 13a, 13b et 13c sont maintenues sur le circuit 12 par des dispositifs de maintien 14. Les trois diodes électroluminescentes 21a, 21b, 21c sont connectées au connecteur électrique amovible 15 pour recevoir des signaux de commande respectivement 22a, 22b et 22c. Les photodiodes 4a, 4b, 4c en liaison optique avec les secondes fibres respectivement 13a, 13b, 13c sont connectées à des amplificateurs respectivement 7a, 7b, 7c.

Les gains de chaque amplificateur sont déterminés par des résistances 36a, 36b, 36c connectées entre la sortie et l'entrée inverseuse de chaque amplificateur respectivement 7a, 7b, 7c. Les sorties des amplificateurs sont connectées au connecteur 15 pour fournir des signaux de mesure 17a, 17b, 17c, représentatifs des mesures effectuées par chaque capteur respectivement 25a, 25b, 25c. Le connecteur 15 fournit aussi une ligne de référence 19 et deux lignes d'alimentation V+ et V- pour l'alimentation des amplificateurs.

Dans le mode de réalisation de la figure 7, les capteurs 25a, 25b, 25c sont notamment des capteurs de température fonctionnant par exemple comme un capteur de la figure 5 avec un matériau fluorescent ou luminescent. La sonde de la figure 7 est avantageusement utilisée pour la mesure de température d'une installation électrique comportant des conducteurs 37a, 37b, 37c. Les fibres optiques ayant une tenue diélectrique élevée, des sondes selon la figure 7 peuvent être utilisées dans des installations ayant des tensions électriques élevées, notamment des basses tensions, des moyennes tensions ou des hautes tensions.

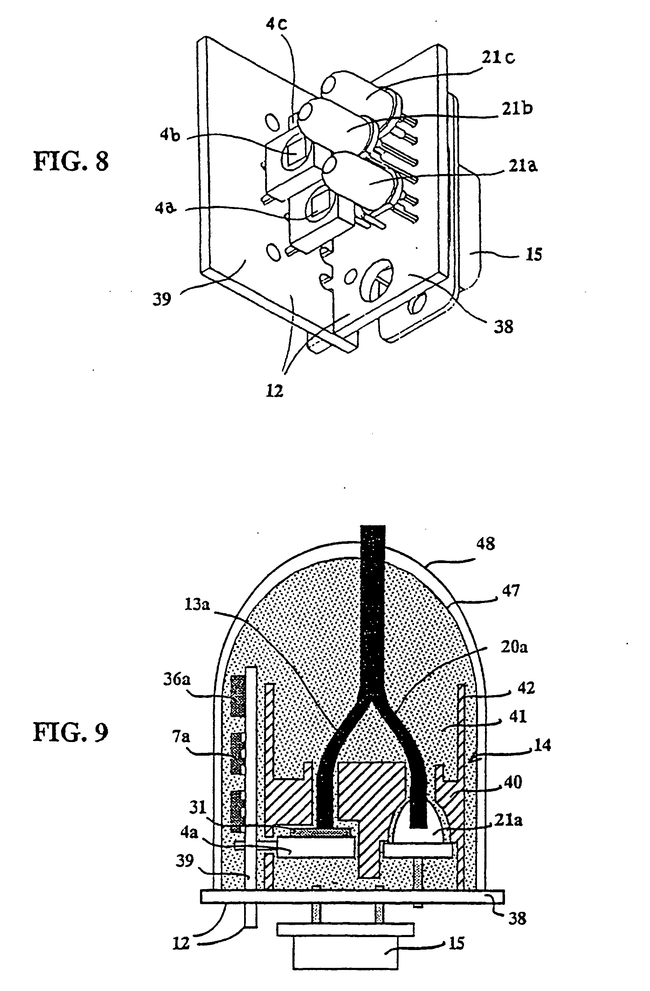

La figure 8 montre une partie d'une sonde à trois voies selon la figure 7. Dans ce mode de réalisation, le circuit 12 comporte deux circuits imprimés 38 et 39 disposés de manière sensiblement orthogonale. Un premier circuit imprimé 38 comporte les diodes électroluminescentes 21a, 21b, 21c et le connecteur 15 et un second circuit imprimé 39 comporte les photo-détecteurs 4a, 4b, 4c avec les amplificateurs 7a, 7b, 7c. Les deux circuits imprimés sont reliés mécaniquement et électriquement. Cette disposition réduit avantageusement le volume de la sonde et réduit également la surface de connexion avec le dispositif de mesure.

Une vue latérale en coupe d'une sonde selon la figure 8 est représentée sur la figure 9. Dans ce mode de réalisation, les premières fibres optiques 20a, 20b, 20c sont mises dans un orifice prévu sur les diodes électroluminescentes 21a, 21b, 21c. La figure 9 montre une fibre 20a introduite dans une diode 21a. Les secondes fibres 13a, 13b, 13c sont mises en liaison optique avec les photo-détecteurs respectivement 4a, 4b, 4c. Ainsi, la fibre 13a est mise en face du photo-détecteur 4a. Pour améliorer le fonctionnement, un filtre optique 31 disposé entre la seconde fibre 13a et le photo-détecteur 4a filtre des signaux lumineux afin de laisser passer les signaux émis par le capteur et arrêter les signaux générés par les diodes électroluminescentes.

Dans le mode de réalisation de la figure 9, le dispositif de maintien 14 de la fibre optique comporte une pièce 40 de fixation et de positionnement des fibres optiques. Les fibres optiques peuvent être également collées sur la pièce 40 par coulage d'un matériau 41 dans un évidement 42 de ladite pièce 40 recevant les fibres.

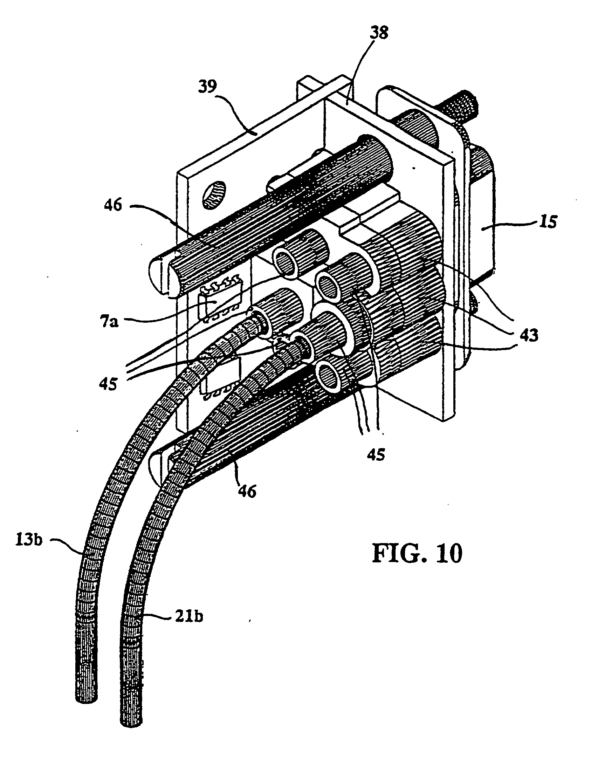

Dans le mode de réalisation de la figure 10, un dispositif de maintien 14 comporte une pièce de base 43, et des éléments de guidage 45 de fibres optiques.

Avantageusement, selon un mode de réalisation différent, une sonde comporte un premier enrobage isolant 47 recouvrant des composants électroniques du circuit 12 et un second enrobage conducteur 48 recouvrant le premier enrobage isolant (voir figure 9). Le second enrobage conducteur a la fonction d'un blindage électromagnétique. De préférence, les matériaux constituant les enrobages sont des polymères.

Pour assurer la fixation des sondes à fibres optiques sur des dispositifs 8, les circuits 12 ou les connecteurs 15 comportent des dispositifs de blocage 46 pour fixer les connecteurs amovibles 15 sur des connecteurs fixes 16.

Dans d'autres modes de réalisation, le circuit électrique 12 peut être un circuit filaire, un circuit imprégné ou, par exemple, un circuit pour montage de composants en surface.

## Revendications

1. Sonde de mesure à fibre optique comportant :
- au moins une fibre optique (2, 13, 20),
- au moins un capteur de température (25, 25a-c) disposé à une extrémité d'au moins une fibre optique (13, 20, 29), et
- au moins un circuit électronique (12) comportant des premiers moyens (15) de connexion électrique,
**caractérisée en ce que** les premiers moyens de connexion sont des moyens de connexion amovibles,
et **en ce qu'**elle comporte :
- des moyens convertisseurs (4, 21, 4a, 4b, 4c, 21a, 21b, 21c) de signaux connectés aux premiers moyens de connexion amovibles et destinés à faire une interface entre des signaux lumineux (26, 27) véhiculés par au moins une fibre optique associée audit capteur de température et des signaux électroniques (17, 22) destinés à circuler dans lesdits premiers moyens de connexion, et
- des moyens de maintien (14, 40-45) de fibre optique pour maintenir de manière fixe ladite au moins une fibre optique associée audit capteur de température en liaison optique avec lesdits moyens convertisseurs.

2. Sonde selon la revendication 1, **caractérisée en ce qu'**elle comporte des moyens d'amplification (7, 23) connectés entre des moyens convertisseurs (4, 21) de signaux et les premiers moyens de connexion (15).

3. Sonde selon l'une des revendications 1 ou 2, **caractérisée en ce qu'**elle comporte des moyens de mémorisation (28) pour mémoriser des paramètres de calibration ou de réglage.

4. Sonde selon l'une quelconque des revendications 1 à 3, **caractérisée en ce que** les moyens convertisseurs de signaux (4, 21) comportent au moins un photo-détecteur (4, 4a, 4b, 4c) convertissant des signaux lumineux fournis à une extrémité d'une fibre optique (13) en signaux électroniques (17).

5. Sonde selon l'une quelconque des revendications 1 à 4, **caractérisée en ce que** les moyens convertisseurs de signaux comportent au moins un émetteur optique (21, 21a, 21 b, 21c) pour convertir des signaux électroniques (22) provenant des premiers moyens de connexion (15) électriques en signaux lumineux (26) injectés à une extrémité d'une fibre optique (20) maintenue en liaison optique avec ledit émetteur optique.

6. Sonde selon l'une quelconque des revendications 1 à 5, **caractérisée en ce que** le capteur de température (25, 25a-c) disposé à une extrémité d'au moins une fibre optique (13, 20, 29) comporte un matériau luminescent (33), un premier signal lumineux (26) étant envoyé depuis des moyens convertisseurs pour exciter ledit matériau luminescent et un second signal (27) lumineux étant émis par ledit matériau et véhiculé à travers ladite fibre optique vers les moyens convertisseurs de signaux, ledit second signal lumineux (27) ayant une longueur d'onde différente de la longueur d'onde du premier signal lumineux et une décroissance (34) représentative d'une température.

7. Sonde selon la revendication 6, **caractérisée en ce qu'**elle comporte une première et une seconde fibres optiques (20, 13) disposées entre le capteur (25, 25a-c) et les moyens convertisseurs de signaux (4, 21), la première fibre optique 20 conduisant le premier signal lumineux (26) et la seconde fibre optique (13) conduisant le second signal lumineux (27).

8. Sonde selon l'une quelconque des revendications 1 à 6, **caractérisée en ce qu'**elle comporte un système optique de séparation (30) disposé entre la fibre optique (29) et les moyens convertisseurs de signaux.

9. Sonde selon l'une quelconque des revendications 1 à 8, **caractérisée en ce qu'**elle comporte un filtre optique (31) disposé entre une extrémité d'une fibre optique (29, 13, 13a-c) et les moyens convertisseurs de signaux (4, 4a-c).

10. Sonde selon l'une quelconque des revendications 1 à 9 **caractérisée en ce que** ladite au moins une fibre optique (13, 19, 20) est une fibre optique en matière plastique.

11. Sonde selon l'une quelconque des revendications 1 à 10, **caractérisée en ce que** les moyens de maintien (14) de fibre optique comportent une pièce de positionnement d'une fibre optique sur les moyens convertisseurs de signaux (4, 21).

12. Sonde selon l'une quelconque des revendications 1 à 11, **caractérisée en ce que** les moyens de maintien (14) de fibre optique comportent un élément de guidage (45).

13. Sonde selon l'une quelconque des revendications à 7 et 10 à 12, **caractérisée en ce qu'**elle comporte des moyens convertisseurs comportant au moins une diode (21, 21a-c) électroluminescente, un photo-détecteur (4, 4a-c) et des moyens de fixation (14) pour maintenir une première fibre optique (20, 20a-c) en liaison optique avec ladite diode électroluminescente et une seconde fibre optique (13, 13a-c) en liaison optique avec ledit photo-détecteur.

14. Sonde selon l'une des revendications 12 ou 13, **caractérisée en ce qu'**elle comporte des moyens de fixation pour maintenir trois premières fibres optiques (20a, 20b, 20c) en liaison optique avec trois diodes électroluminescentes (21a, 21b, 21c) et trois secondes fibres optiques (13a, 13b, 13c) en liaison optique avec trois photo-détecteurs (4a, 4b, 4c).

15. Sonde selon l'une quelconque des revendications 13 ou 14, **caractérisée en ce que** les diodes électroluminescentes et les premiers moyens de connexion sont disposés sur un premier circuit imprimé (38) et que les photo-détecteurs sont disposés sur un second circuit imprimé (39), le second circuit imprimé étant relié électriquement au premier circuit imprimé et positionné sensiblement orthogonalement.

16. Sonde selon l'une quelconque des revendications 1 à 15, **caractérisée en ce qu'**elle comporte un premier enrobage isolant (47) couvrant au moins une partie du circuit électronique (12) et un second enrobage (48) conducteur couvrant au moins une partie du premier enrobage.

17. Sonde selon l'une quelconque des revendications 1 à 16, **caractérisée en ce qu'**elle est utilisée pour la mesure de température d'au moins un conducteur électrique (37a-c).

18. Dispositif de mesure à fibre optique comportant des moyens de traitement de signaux (6) **caractérisé en ce qu'**il comporte au moins une sonde selon l'une quelconque des revendications 1 à 17, et des seconds moyens de connexion connectés audits moyens de traitement et destinés à coopérer avec les premiers moyens de connexion (15).

19. Installation comportant au moins un conducteur électrique **caractérisée en ce qu'**elle comporte au moins une sonde selon l'une quelconque des revendications 1 à 17 reliée audit au moins un conducteur électrique.

## Patentansprüche

1. Lichtleitfaser-Meßfühler mit
- mindestens einer Lichtleitfaser (2, 13, 20),
- mindestens einem Temperaturfühler (25, 25a-c), der an einem Ende mindestens einer Lichtleitfaser (13, 20, 29) angeordnet ist,
- mindestens einer elektronischen Schaltung (12) mit ersten elektrischen Verbindungsmitteln (15),
**dadurch gekennzeichnet, daß** die ersten Verbindungsmittel als trennbare Verbindungsmittel ausgebildet sind und daß der Meßfühler folgende Teile umfaßt:
- Signalumsetzmittel (4, 21, 4a, 4b, 4c, 21a, 21b, 21c), die mit den ersten trennbaren Verbindungsmitteln verbunden sind und als Schnittstelle zwischen Lichtsignalen (26, 27), die über mindestens eine, dem genannten Temperaturfühler zugeordnete Lichtleitfaser geführt werden, und elektronischen Signalen (71, 22) fungieren, welche dazu dienen, über die genannten ersten Verbindungsmittel zu fließen,
- Lichtleiter-Haltemittel (14, 40-45) zur festen Halterung der genannten, mindestens einen Lichtleitfaser, die dem genannten, optisch mit den genannten Umsetzmitteln verbundenen Temperaturfühler zugeordnet ist.

2. Meßfühler nach Anspruch 1, **dadurch gekennzeichnet, daß** er Verstärkermittel (7, 23) umfaßt, die zwischen Signalumsetzmittel (4, 21) und die ersten Verbindungsmittel (15) geschaltet sind.

3. Meßfühler nach einem der Ansprüche 1 oder 2, **dadurch gekennzeichnet, daß** er Speichermittel (28) zur Speicherung von Kalibrier- oder Einstellparametern umfaßt.

4. Meßfühler nach irgendeinem der Ansprüche 1 bis 3, **dadurch gekennzeichnet, daß** die Signalumsetzmittel (4, 21) mindestens einen Fotodetektor (4, 4a, 4b, 4c) umfassen, der die an einem Ende einer Lichtleitfaser (13) bereitgestellten Lichtsignale in elektronische Signale (17) umwandelt.

5. Meßfühler nach irgendeinem der Ansprüche 1 bis 4 **dadurch gekennzeichnet, daß** die Signalumsetzmittel mindestens einen optischen Sender (21, 21a, 21b, 21c) zur Umwandlung der von den ersten elektrischen Verbindungsmitteln (15) gelieferten elektronischen Signale (22) in Lichtsignale (26) umfassen, die in ein Ende einer in optischer Verbindung mit dem genannten optischen Sender gehaltenen Lichtleitfaser (20) eingekoppelt werden.

6. Meßfühler nach irgendeinem der Ansprüche 1 bis 5 **dadurch gekennzeichnet, daß** der an einem Ende mindestens einer Lichtleitfaser (13, 20, 29) angeordnete Temperaturfühler (25, 25a-c) einen lumineszierenden Stoff (33) umfaßt, wobei ein erstes Lichtsignal (26) von den Signalumsetzmitteln ausgesendet wird, um den genannten lumineszierenden Stoff anzuregen, und ein zweites Lichtsignal (27) vom genannten Stoff ausgesendet und über die genannte Lichtleitfaser zu den Signalumsetzmitteln geleitet wird, wobei das zweite Lichtsignal (27) eine von der Wellenlänge des ersten Lichtsignals abweichende Wellenlänge sowie eine Dämpfung aufweist, die eine Temperatur abbildet.

7. Meßfühler nach Anspruch 6, **dadurch gekennzeichnet, daß** er eine erste Lichtleitfaser (20) und eine zweite Lichtleitfaser (13) umfaßt, die zwischen dem Meßwertaufnehmer (25, 25a-c) und den Signalumsetzmitteln (4, 21) angeordnet sind, wobei die erste Lichtleitfaser (20) das erste Lichtsignal (26) leitet und die zweite Lichtleitfaser (13) das zweite Lichtsignal (27) leitet.

8. Meßfühler nach irgendeinem der Ansprüche 1 bis 6 **dadurch gekennzeichnet, daß** er ein optisches Weichensystem (30) umfaßt, das zwischen der Lichtleitfaser (29) und den Signalumsetzmitteln angeordnet ist.

9. Meßfühler nach irgendeinem der Ansprüche 1 bis 8 **dadurch gekennzeichnet, daß** er ein optisches Filter (31) umfaßt, das zwischen ein Ende einer Lichtleitfaser (29, 13, 13a-c) und die Signalumsetzmittel (4, 4a-c) geschaltet ist.

10. Meßfühler nach irgendeinem der Ansprüche 1 bis 9 **dadurch gekennzeichnet, daß** die genannte, mindestens eine Lichtleitfaser (13, 19, 20) als Kunststoff-Lichtleitfaser ausgebildet ist.

11. Meßfühler nach irgendeinem der Ansprüche 1 bis 10 **dadurch gekennzeichnet, daß** die Lichtleiter-Haltemittel (14) ein Positionierteil zur Ausrichtung der Lichtleitfaser in bezug zu den Signalumsetzmitteln (4, 21) umfassen.

12. Meßfühler nach irgendeinem der Ansprüche 1 bis 11 **dadurch gekennzeichnet, daß** die Lichtleiter-Haltemittel (14) ein Führungselement (45) umfassen.

13. Meßfühler nach irgendeinem der Ansprüche 1 bis 7 und 10 bis 12, **dadurch gekennzeichnet, daß** er Umsetzmittel umfaßt, die mindestens eine Elektrolumineszenzdiode (21, 21a-c), einen Fotodetektor (4, 4a-c) sowie Befestigungsmittel (14) umfassen, welche dazu dienen, eine erste Lichtleitfaser (20, 20a-c) in optischer Verbindung mit der genannten Elektrolumineszenzdiode zu halten, und eine zweite Lichtleitfaser (13, 13a-c) in optischer Verbindung mit dem genannten Fotodetektor zu halten.

14. Meßfühler nach einem der Ansprüche 12 oder 13, **dadurch gekennzeichnet, daß** er Befestigungsmittel umfaßt, um drei erste Lichtleitfasern (20a, 20b, 20c) in optischer Verbindung mit drei Elektrolumineszenzdioden (21a, 21b, 21c) sowie drei zweite Lichtleitfasern (13a, 13b, 13c) in optischer Verbindung mit drei Fotodetektoren (4a, 4b, 4c) zu halten.

15. Meßfühler nach einem der Ansprüche 12 oder 13, **dadurch gekennzeichnet, daß** die Elektrolumineszenzdioden und die ersten Verbindungsmittel auf einer ersten gedruckten Schaltung (38) und die Fotodetektoren auf einer zweiten gedruckten Schaltung (39) angeordnet sind, wobei die zweite gedruckte Schaltung elektrisch mit der ersten gedruckten Schaltung verbunden und annähernd senkrecht zur dieser angeordnet ist.

16. Meßfühler nach irgendeinem der Ansprüche 1 bis 15, **dadurch gekennzeichnet, daß** er eine erste Isolierstoffumhüllung (47) umfaßt, die mindestens einen Teilabschnitt der elektronischen Schaltung (12) umgibt, sowie eine zweite leitende Umhüllung (48) umfaßt, die mindestens einen Teilabschnitt der ersten Umhüllung umgibt.

17. Meßfühler nach irgendeinem der Ansprüche 1 bis 16, **dadurch gekennzeichnet, daß** er zur Temperaturmessung mindestens eines elektrischen Leiters (37a-c) verwendet wird.

18. Lichtleitfaser-Meßanordnung mit Signalverarbeitungsmitteln (6), **dadurch gekennzeichnet, daß** sie mindestens einen Meßfühler nach irgendeinem der vorhergehenden Ansprüche 1 bis 17 sowie zweite Verbindungsmittel umfaßt, die mit den genannten Verarbeitungsmitteln verbunden sind und dazu dienen, mit den ersten Verbindungsmitteln (15) zusammenzuwirken.

19. Installation mit mindestens einem elektrischen Leiter, **dadurch gekennzeichnet, daß** sie mindestens einen Meßfühler nach irgendeinem der Ansprüche 1 bis 17 umfaßt, der mit dem genannten, mindestens einen elektrischen Leiter verbunden ist.

## Claims

1. An optic fiber measuring probe comprising:
- at least one optic fiber (2, 13, 20),
- at least one temperature sensor (25, 25a-c) arranged at one end of at least one optic fiber (13, 20, 29), and
- at least one electronic circuit (12) comprising first electrical connection means (15),
**characterized in that** the first connection means are removable connection means, and that it comprises:
at least one electronic circuit (12) comprising :
- signal conversion means (4, 21, 4a, 4b, 4c, 21 a, 21 b, 21 c) connected to the removable first connection means and designed to form an interface between light signals (26, 27) conveyed by at least one optic fiber associated to said temperature sensor and electronic signals (17, 22) designed to flow in said first connection means, and
- optic fiber securing means (14, 40-45) to fixedly maintain said at least one optic fiber associated to said temperature sensor in optic connection with said conversion means.

2. The probe according to claim 1, **characterized in that** it comprises amplifying means (7, 23) connected between signal conversion means (4, 21) and the first connection means (15).

3. The probe according to claim 1 or 2, **characterized in that** it comprises storage means (28) to store calibration or setting parameters.

4. The probe according to any one of the claims 1 to 3, **characterized in that** the signal conversion means (4, 21) comprise at least one photo-detector (4, 4a, 4b, 4c) converting light signals supplied at one end of an optic fiber (13) into electronic signals (17).

5. The probe according to any one of the claims 1 to 4, **characterized in that** the signal conversion means comprise at least one optic transmitter (21, 21a, 21b, 21c) to convert electronic signals (22) originating from the first electrical connection means (15) into light signals (26) input at one end of an optic fiber (20) maintained in optic connection with said optic transmitter.

6. The probe according to any one of the claims 1 to 5, **characterized in that** the temperature sensor (25, 25a-c) arranged at one end of at least one optic fiber (13, 20, 29) comprises a light-emitting material (33), a first light signal (26) being sent from conversion means to excite said light-emitting material and a second light signal (27) being transmitted by said material and conveyed via said optic fiber to the signal conversion means, said second light signal (27) having a different wavelength from the wavelength of the first light signal and a decrease (34) representative of a temperature.

7. The probe according to claim 6, **characterized in that** it comprises a first and a second optic fiber (20, 13) arranged between the sensor (25, 25a-c) and the signal conversion means (4, 21), the first optic fiber (20) conducting the first light signal (26) and the second optic fiber (13) conducting the second light signal (27).

8. The probe according to any one of the claims 1 to 6, **characterized in that** it comprises an optic separation system (30) arranged between the optic fiber (29) and the signal conversion means.

9. The probe according to any one of the claims 1 to 8, **characterized in that** it comprises an optic filter (31) arranged between one end of an optic fiber (29, 13, 13a-c) and the signal conversion means (4, 4a-c).

10. The probe according to any one of the claims 1 to 9, **characterized in that** said at least one optic fiber (13, 19, 20) is an optic fiber made of plastic material.

11. The probe according to any one of the claims 1 to 10, **characterized in that** the optic fiber securing means (14) comprise a positioning part for positioning an optic fiber on the signal conversion means (4, 21).

12. The probe according to any one of the claims 1 to 11, **characterized in that** the optic fiber securing means (14) comprise a guiding element (45).

13. The probe according to any one of the claims 1 to 7 and 10 to 12, **characterized in that** it comprises conversion means comprising at least one light-emitting diode (21, 21a-c), a photo-detector (4, 4a-c) and fixing means (14) to maintain a first optic fiber (20, 20a-c) in optic connection with said light-emitting diode and a second optic fiber (13, 13a-c) in optic connection with said photo-detector.

14. The probe according to one of the claims 12 or 13, **characterized in that** it comprises fixing means to maintain three first optic fibers (20a, 20b, 20c) in optic connection with three light-emitting diodes (21a, 21b, 21c) and three second optic fibers (13a, 13b, 13c) in optic connection with three photo-detectors (4a, 4b, 4c).

15. The probe according to either one of the claims 13 or 14, **characterized in that** the light-emitting diodes and the first connection means are arranged on a first printed circuit (38) and that the photo-detectors are arranged on a second printed circuit (39), the second printed circuit being electrically connected to the first printed circuit and positioned substantially orthogonally.

16. The probe according to any one of the claims 1 to 15, **characterized in that** it comprises a first insulating coating (47) covering at least a part of the electronic circuit (12) and a second conducting coating (48) covering at least a part of the first coating.

17. The probe according to any one of the claims 1 to 16, **characterized in that** it is used for measuring the temperature of at least one electrical conductor (37a-c).

18. An optic fiber measuring device comprising signal processing means (6), **characterized in that** it comprises at least one probe according to any one of the claims 1 to 17, and second connection means connected to said processing means and designed to cooperate with the first connection means (15).

19. Installation comprising at least one electrical conductor, **characterized in that** it comprises at least one probe according to any one of the claims 1 to 17 connected to said at least one electrical conductor.
